(19) Europäisches Patentamt / European Patent Office / Office européen des brevets

(11) **EP 3 254 153 B1**

(12) **FASCICULE DE BREVET EUROPEEN**

(45) Date de publication et mention de la délivrance du brevet:
**09.08.2023   Bulletin 2023/32**

(21) Numéro de dépôt: **16703937.9**

(22) Date de dépôt: **02.02.2016**

(51) Classification Internationale des Brevets (IPC):
**G02C 7/10** *(2006.01)*

(52) Classification Coopérative des Brevets (CPC):
**G02C 7/104;** G02C 2202/10

(86) Numéro de dépôt international:
**PCT/EP2016/052104**

(87) Numéro de publication internationale:
**WO 2016/124556 (11.08.2016 Gazette 2016/32)**

(54) **LENTILLE OPHTALMIQUE, NOTAMMENT POUR LUNETTES DE SOLEIL**

OPHTHALMISCHE LINSE, INSBESONDERE FÜR EINE SONNENBRILLE

OPHTHALMIC LENS, IN PARTICULAR FOR SUNGLASSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **02.02.2015   FR 1550796**

(43) Date de publication de la demande:
**13.12.2017   Bulletin 2017/50**

(73) Titulaire: **BNL Eurolens**
**01200 Montanges (FR)**

(72) Inventeurs:
• **MARTINS, Sébastien**
**01100 Apremont (FR)**
• **LEDIEN, Franck**
**01130 Echallon (FR)**
• **CLERC, Didier**
**01200 Eloise (FR)**

(74) Mandataire: **Croonenbroek, Thomas Jakob et al Innovincia**
**11, avenue des Tilleuls**
**74200 Thonon-les-Bains (FR)**

(56) Documents cités:
**EP-A1- 2 602 655     FR-A1- 2 990 774**
**US-A- 5 149 183     US-A1- 2010 149 483**

**Description**

La présente invention concerne une lentille ophtalmique notamment pour lunettes de soleil.

Le port de lunettes de soleil, notamment quand il règne une très forte luminosité, est médicalement très recommandé pour préserver son potentiel de vision à long terme et aussi pour des raisons de sécurité par exemple lors de la conduite automobile.

En effet, les lunettes de soleil constituent une barrière contre les rayons UV. De nombreuses études ont montré que les rayons UV peuvent engendrer des lésions, inflammations ou altérations de la cornée, du cristallin ou de la rétine. Afin d'éviter ces effets et surtout une modification de l'oeil qui peut diminuer la vision à long terme, on incite de plus en plus les personnes de porter des lunettes de soleil pour éviter une exposition à une intensité lumineuse trop importante.

De plus, les lunettes de soleil permettent aussi de lutter contre l'éblouissement, ce qui augmente la sécurité lors de la conduite automobile ou des activités sportives.

C'est pourquoi des lunettes de soleil généralement vendues aujourd'hui bloquent tout rayonnement d'une longueur d'onde inférieure à 400nm.

Cependant, des études médicales des dernières années ont démontré qu'une plage de longueur d'onde autour de 435nm (+/- 20nm), connue aussi sous le nom de mauvais bleu ou « bad blue » en anglais, joue un rôle important par exemple dans la dégénérescence maculaire liée à l'âge (DMLA ou « AMD » en anglais). Il s'agit d'un processus qui est cumulatif au cours de la vie et qui devient gênant en particulier pour des personnes au-delà de 60 ans.

Pour remédier à ces problèmes, on connaît des lentilles ophtalmiques présentant des propriétés de filtration dans la partie bleue visible du spectre entre 400nm et 480nm.

Toutefois, ces lentilles ophtalmiques connues ne donnent pas entière satisfaction dans la mesure où une partie du « bon bleu » entre 450nm et 480nm est également atténuée de façon importante ce qui nuit à la perception spectrale visuelle du porteur des lunettes de soleil. De plus, on constate une altération du contraste perçu par l'utilisateur ce qui peut être un inconvénient de sécurité, en particulier pour la conduite automobile.

Les documents US 5 149 183, EP 2 602 655, FR 2 990 774, et US2010/149483 concernent des lentilles ophtalmologiques de l'état de la technique.

L'invention a donc pour objectif de proposer une lentille ophtalmique améliorée permettant de résoudre au moins partiellement les inconvénients de l'art antérieur.

À cet effet, l'invention a pour objet une lentille ophtalmique selon la revendication 1 comportant un substrat, ladite lentille présentant un spectre de transmission tel que:

- la transmission moyenne dans la gamme de longueur d'ondes comprises entre 380nm inclus et 780nm inclus ([380nm ; 780nm]) est inférieure à 60%,
- la transmission moyenne aux longueurs d'ondes inférieures ou égales à 400 nm est inférieure à 1%, préférentiellement à 0,5%, très préférentiellement inférieure à 0,1%,
- la transmission moyenne aux longueurs d'ondes supérieures à 400 nm et inférieures à 500 nm incluses (c'est-à-dire dans la plage [400nm ; 500nm]) est inférieure à 30% avec un minimum de transmission inférieur à 10%, préférentiellement inférieur à 5%, très préférentiellement inférieur à 1% entre 425 nm et 445 nm inclus (c'est-à-dire dans la plage [425nm ; 445nm]).

Grâce à ces propriétés, la lentille ophtalmique selon l'invention est apte à filtrer avec une forte efficacité, et donc à protéger l'oeil du porteur, les longueurs d'ondes correspondant aux ultra-violets, mais également les longueurs d'ondes correspondant au mauvais bleu, tout en préservant les caractéristiques colorimétriques de la lentille.

En effet, bien que coupant le mauvais bleu, la lentille permet une transmission suffisante de bleu, en particulier par rapport au spectre de perception des couleurs par l'oeil. De plus, elle permet d'avoir un verre de teinte comportant des nuances bleutées car on ne coupe pas tout le bleu.

Enfin, les lentilles ophtalmiques destinées pour les lunettes de soleil doivent respecter certains critères relatifs à la perception des teintes par le porteur. Notamment de telles lentilles doivent être conformes à la norme ISO12312-1 : 2013 et/ou ANSI Z80.3-2001 qui définit des critères pour leur port dans le cadre d'une activité de la conduite d'un véhicule. Ainsi les lentilles ophtalmiques pour lunettes de soleil ne doivent en particulier pas modifier la perception de la teinte des signaux routiers.

Les lentilles ophtalmiques selon l'invention garantissent ainsi de part leur spectre de transmission une excellente protection à un porteur grâce à la combinaison simultanée des facteurs suivants :

- une transmission réduite sur l'ensemble du spectre visible du fait de leurs caractéristiques solaires,
- une absorption des longueurs d'ondes UV,
- une absorption à très forte efficacité du mauvais bleu,
- un maintien d'une transmission dans le « bon bleu », et

-   un respect de la norme ISO12312-1 :2013 et/ou ANSI Z80.3-2001 offrant ainsi une sécurité de port lors d'une activité de conduite d'un véhicule.

La lentille ophtalmique peut présenter une ou plusieurs des caractéristiques suivantes :
Selon l'invention, la transmission moyenne dans la plage de longueurs d'onde comprises entre 400nm et 500nm présente un premier maximum de transmission entre 405nm et 425nm.

Selon un autre aspect, le premier maximum de transmission est au moins six fois supérieur à la transmission du premier minimum de transmission.

Selon l'invention, la transmission du premier maximum de transmission est au moins deux fois supérieure à la transmission du premier minimum de transmission et possède une valeur de transmission supérieure d'au moins 2% de transmission à la transmission du premier minimum.

Selon encore un autre aspect, le premier maximum de transmission est un pourcentage de transmission plus important d'au moins 2%, préférentiellement 4% à la transmission du premier minimum de transmission.

Selon un aspect, le premier minimum est situé à 435nm avec une précision +/- 5nm, de préférence avec une précision de +/- 2nm.

Selon un autre aspect, le premier minimum est un pic d'absorption avec un taux d'absorption supérieur à 95% et de préférence supérieur à 99,5%.

Le pic d'absorption peut présenter une largeur au quart de hauteur de 50nm ou moins, et une largeur à mi-hauteur de 30nm ou moins, et une largeur au deux tiers de hauteur du pic d'absorption de 20nm ou moins.

Selon encore un autre aspect, la transmission au premier maximum est supérieure à 1%, de préférence supérieure à 4%.

Selon un autre aspect, la transmission dans la gamme de longueur d'ondes comprise entre 440nm et 500nm augmente.

La transmission moyenne entre 380 et 780 nm inclus peut être inférieure à 35%, notamment inférieure à 25% et de préférence inférieure à 18%.

La transmission moyenne entre 400nm et 450nm est par exemple inférieure à la transmission moyenne entre 450nm et 650nm et la transmission moyenne entre 450nm et 650nm est par exemple inférieure à la transmission moyenne entre 650nm et 780nm.

Selon un autre aspect, la lentille ophtalmique est adaptée à la conduite automobile selon la norme ISO12312-1 : 2013.

La lentille ophtalmique peut comporter un ensemble polarisant.

Le substrat comporte par exemple une matière thermoplastique, notamment du polycarbonate.

L'invention concerne également un procédé selon la revendication 13 d'optimisation d'une couleur d'une lentille ophtalmique en vue d'une conformité à la norme: ISO12312-1 : 2013 par rapport à un spectre donné, dans lequel on augmente la transmission de la lentille dans la plage de longueurs d'onde comprise d'une part entre 405nm et 425nm avec un premier maximum de transmission (105) entre 405nm et 425nm et d'autre part entre 440nm et 450nm et on diminue la transmission dans la plage de longueurs d'onde compris entre 430nm et 440nm pour présenter un premier minimum de transmission (100) inférieur à 10%, le premier maximum de transmission (105) possédant une valeur de transmission au moins deux fois supérieure à la transmission du premier minimum de transmission (100) avec une valeur de transmission supérieure d'au moins 2% de transmission.

D'autres caractéristiques et avantages de l'invention apparaîtront plus clairement à la lecture de la description suivante, donnée à titre d'exemple illustratif et non limitatif, et aux dessins annexés montrant :

-   la figure 1 est un exemple d'une lentille ophtalmique selon l'invention,
-   la figure 2 est un graphe montrant la transmittance d'un premier exemple de réalisation d'une lentille ophtalmique selon l'invention en fonction de la longueur d'onde.
-   la figure 3 est un graphe montrant la transmittance d'un second exemple de réalisation d'une lentille ophtalmique selon l'invention en fonction de la longueur d'onde,
-   la figure 4 est un graphe montrant comme exemple comparatif la transmittance d'une lentille ophtalmique selon l'état de la technique en fonction de la longueur d'onde, et
-   la figure 5 est un graphe montrant la transmittance d'un troisième exemple de réalisation d'une lentille ophtalmique selon l'invention en fonction de la longueur d'onde.

Sur toutes les figures, les éléments identiques portent les mêmes numéros de référence.

On va maintenant décrire un exemple d'un mode de réalisation en référence aux figures.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Par transmission moyenne entre deux longueurs d'onde $\lambda_1$ et $\lambda_2$, on prend par exemple en compte les définitions ISO 11664-1 et ISO 11664-2.

Plus spécifiquement, la transmission moyenne peut être définie comme :

$$\tau_v = 100 \text{ X} \frac{\int_{\lambda_1}^{\lambda_2} \tau(\lambda)\, S_{D65}(\lambda)\, V(\lambda) d\lambda}{\int_{\lambda_1}^{\lambda_2} \tau(\lambda)\, S_{D65}(\lambda)\, V(\lambda) d\lambda}$$

où

$\lambda$ est la longueur d'onde en nanomètres,

$\tau(\lambda)$ est la transmittance spectrale de la lentille

$V(\lambda)$ est la fonction d'efficacité luminescente spectrale pour une vision,

$S_{D65}(\lambda)$ est la distribution spectrale selon la norme CIE (voir ISO 11664-2)

Par l'expression « inclus », on entend que le ou les bords est /sont également compris dans la consigne. Par exemple pour une longueur entre « 425 nm et 445 nm inclus », on comprend qu'il s'agit d'une plage de longueur d'onde qui comprend les bords de la plage de longueur d'onde ainsi définis ([425nm, 445nm]). Ainsi, on définit une plage allant d'une longueur d'onde supérieure ou égale à 425nm jusqu'à inférieure ou égale à 445nm.

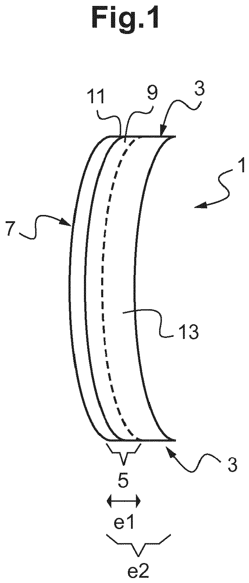

La figure 1 est une vue schématique en coupe transversale d'un exemple de réalisation d'une lentille ophtalmique 1 selon l'invention.

Cette lentille ophtalmique 1 est teintée et par exemple destinée à être utilisée pour des lunettes, en particulier des lunettes de soleil. Pour ce faire, il est seulement nécessaire de façonner le bord externe 3 selon la forme voulue du cadre de la monture.

Par lentille ophtalmique, on entend une lentille correctrice ou non, finie ou semi-finie, apte à être montée dans une monture, par exemple une monture de lunettes, un masque et une visière.

La lentille ophtalmique solaire peut être teintée ou non, ou présenter un gradient de teinte, et elle peut comprendre d'autre fonctions solaires comme une fonction polarisante, photochromique seule ou en combinaison.

Elle peut également comprendre d'autres fonctions supplémentaires, seules ou en combinaison parmi la liste non exhaustive suivante : antichoc, anti-rayures, anti-abrasion, anti-reflet, miroir, anti-salissures, anti-buée, anti-statique. Ces fonctions supplémentaires peuvent être réalisées selon des méthodes classiques (trempage, spin, spray, dépôt sous vide, dépôt à la tournette, dépôt par pulvérisation (spray)...).

La lentille ophtalmique teintée 1 comprend par exemple un ensemble polarisant 5 composé d'au moins d'une première 7 et d'une seconde 9 couches d'un matériau thermoplastique ou thermodurcissable prenant en sandwich un film polarisant 11. Bien entendu, cet ensemble polarisant 5 avec ses couches 7, 9 et 11 est optiquement transparent, c'est-à-dire qu'il laisse passer de la lumière.

Comme on le voit sur la figure 1, la lentille ophtalmique 1 comporte en outre au moins une troisième couche formant substrat 13 d'un matériau thermoplastique, par exemple en polycarbonate, transparent teinté ou coloré adhérant par injection à la seconde couche 9.

A titre d'exemple, l'ensemble polarisant 5 possède une épaisseur e1 comprise entre 0,3 et 1mm et la troisième couche formant substrat 13 possèdent une épaisseur e2 comprise entre 0,5 et 2mm.

Le film polarisant est par exemple un film de polyvinylalcool (PVA) connu pour ses propriétés polarisantes.

Pour une utilisation lunettes, la couche 13 sera celle destinée à être la plus proche de l'oeil de l'utilisateur et la couche 7 celle la plus éloignée de l'oeil de l'utilisateur.

Comme évoquée ci-dessus, les deux couches 7, 9 peuvent être réalisées par un matériau thermoplastique ou thermodurcissable, et la couche 13 peut être réalisée en un matériau thermoplastique.

Comme matériau thermoplastique, on peut par exemple choisir dans le groupe suivant : polymethyl(meth)acrylate, polycarbonate, polycarbonate/polyester blends, polyamide, polyester, cyclic olefin copolymers, polyuréthane, polysulfone, du TAC (triacétate de cellulose) et leur combinaison

Comme matériau thermodurcissable, on peut par exemple utiliser un matériau transparent comme du CAB (cellulose acétate butyrate).

Pour colorer le matériau thermoplastique, il est possible d'ajouter des pigments ou des colorants. Il peut s'agir de pigments organiques ou minéraux. Parmi ceux-ci, il y a notamment le pigment commercialisé sous la référence ABS549 de la société EXCITON (marque déposée) qui est un absorbeur spécifique de faible largeur en longueur d'onde.

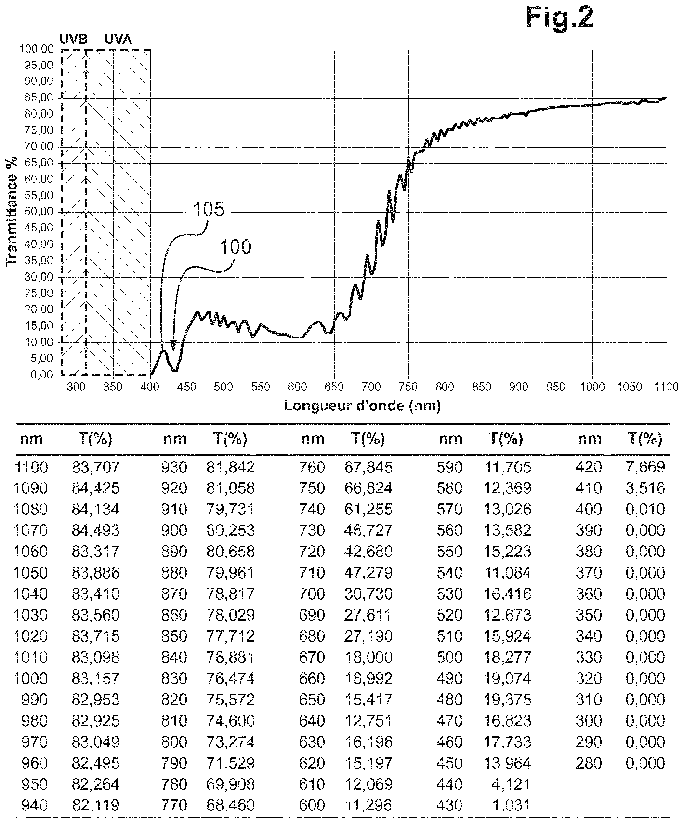

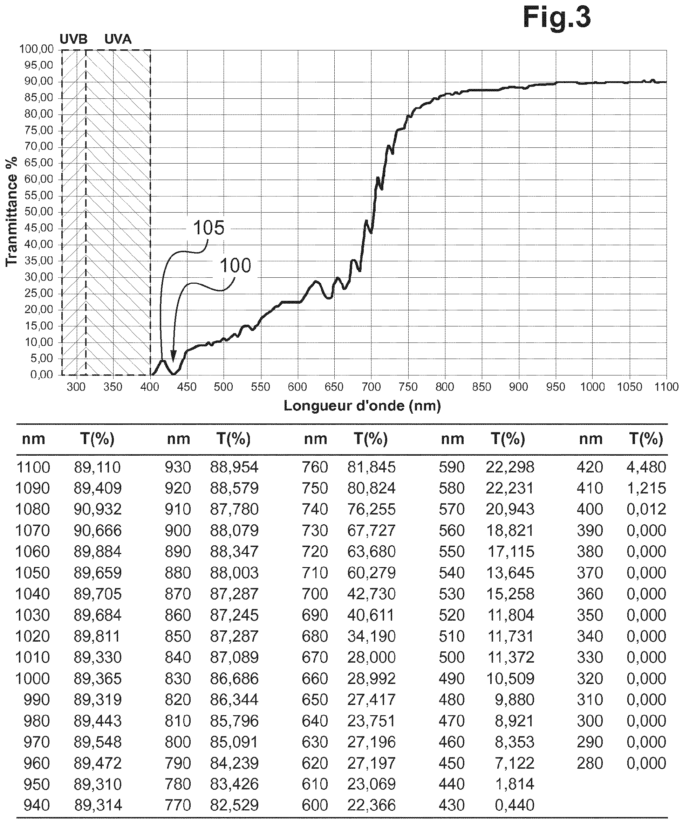

Dans le présent cas, le substrat formé par la couche 13 comporte plusieurs colorants, notamment ABS549, qui coopèrent ensemble afin d'absorber la lumière traversant la lentille, la lentille ayant un spectre de transmission tel que, comme on le voit sur les figures 2 et 3 montrant deux exemples de spectres, l'un pour un verre de couleur grise lorsque perçu par un observateur extérieur (figure 2) et l'autre pour un verre de couleur brune lorsque perçu par un observateur extérieur (figure 3):

- la transmission moyenne dans la gamme de longueur d'ondes comprises entre 380nm inclus et 780nm inclus est inférieure à 60%.

- la transmission moyenne aux longueurs d'ondes inférieures ou égales à 400 nm est inférieure à 1%, préférentiellement à 0,5%, très préférentiellement inférieure à 0,1%,

- la transmission moyenne aux longueurs d'ondes supérieures à 400 nm et inférieures à 500 nm incluses est inférieure à 30% avec un minimum de transmission désigné par la référence 100 inférieur à 10%, préférentiellement inférieur à 5%, très préférentiellement inférieur à 1% entre 425 nm et 445 nm inclus.

De plus, la transmission aux longueurs d'ondes comprise entre 405nm et 425nm qui est non nulle, présente un premier maximum de transmission désigné par la référence 105, supérieur d'au moins 100% à la transmission au premier minimum 100 de transmission,

Le premier maximum 105 est au moins six fois supérieur à la transmission du premier minimum 100 de transmission.

La transmission au premier minimum 100 est inférieure à 5%, de préférence inférieure à 0,5% (pour la version du spectre de la figure 3).

Le premier minimum 100 est un pic d'absorption avec un taux d'absorption supérieur à 95% et de préférence supérieur à 99,5%.

Plus en détail, le pic d'absorption 100 présente une largeur au quart de hauteur de 50nm ou moins, et une largeur à mi-hauteur de 30nm ou moins, et une largeur au deux tiers de hauteur du pic d'absorption 100 de 20nm ou moins.

La mi-hauteur se trouve à l'endroit où l'absorption est la moitié de l'absorption maximale. Le quart de hauteur se trouve à l'endroit où l'absorption est un quart de l'absorption maximale. Le deux tiers de hauteur se trouve à l'endroit où l'absorption est deux tiers de l'absorption maximale.

Le premier minimum 100 est situé à 435nm avec une précision +/- 5nm, de préférence avec une précision de +/- 2nm. On voit donc que le mauvais bleu est bien filtré par la lentille 1 selon l'invention tout en transmettant au moins une portion des longueurs d'ondes bleues du spectre de lumière visible, qui n'est pas nuisible pour l'oeil humain et peut donc servir à la vision sans danger. On comprend donc qu'ainsi, on obtient une lentille plus protectrice de l'oeil tout en induisant seulement une faible déformation, c'est-à-dire réduite, voire indécelable de la perception des contrastes et des couleurs.

La transmission au premier maximum 105 est supérieur à 1%, de préférence supérieure à 4%.

La transmission dans la gamme de longueur d'ondes comprise entre 440nm et 500nm augmente notamment pour la version « brun » de la figure 3.

En fonction de la classe de lunettes de soleil, la transmission moyenne entre 380et 780nm inclus est inférieure à 35%, notamment inférieur à 25% pour la classe 2 et de préférence inférieur à 18% pour la classe 3.

Pour les deux exemples des figures 2 et 3, la transmission moyenne entre 400nm et 450nm est inférieure à la transmission moyenne entre 450nm et 650nm et la transmission moyenne entre 450nm et 650nm est inférieure à la transmission moyenne entre 650nm et 780nm.

En ce qui concerne la version « brun » de la figure 3, la transmission moyenne entre 400nm et 500nm est inférieure à la transmission moyenne entre 500nm et 650nm et la transmission moyenne entre 500nm et 650nm est inférieure à la transmission moyenne entre 650nm et 780nm.

Point de vue colorimétrie, les caractéristiques colorimétriques du modèle CIE colorimétrique peuvent être les suivantes : L compris entre 36,0 et 37,0, notamment 36,83, a compris entre 6,0 et 7,5, notamment 6.91, et b compris entre 18,0 et 19,5, notamment 18,95.

De plus, la lentille ophtalmique est ainsi adaptée à la conduite automobile selon la norme ISO12312-1 : 2013.

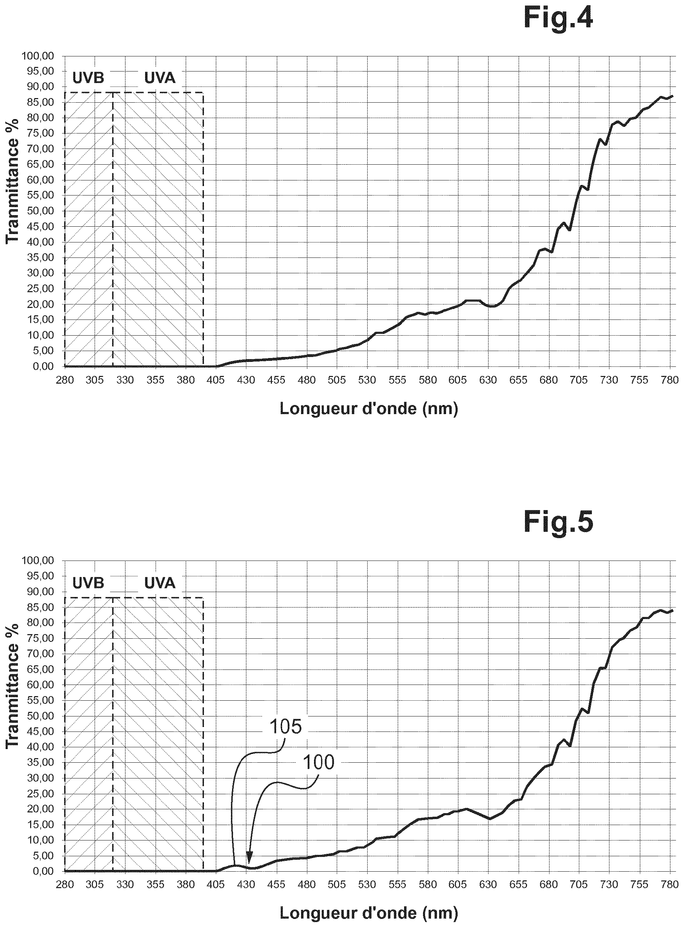

La figure 4 montre à titre d'exemple comparatif la transmittance d'une lentille ophtalmique selon l'état de la technique en fonction de la longueur d'onde. Cette lentille est de couleur brune lorsque perçue par un observateur extérieur. Les mesures de caractérisation de cette lentille ont montrées que celle-ci n'est pas adaptée à la conduite automobile.

Or, on peut procéder grâce à l'invention à une optimisation de couleur d'une telle lentille ophtalmique en vue d'une conformité à la norme: ISO12312-1 : 2013 par rapport à ce spectre donné de la figure 4 par exemple, en augmentant, par rapport à la courbe de référence par exemple figure 4) la transmission de la lentille dans les plages localisées entre 405nm et 425nm d'une part et entre 440nm et 450nm d'autre part et on diminue la transmission dans la plage de longueurs d'onde localisée entre 430nm et 440nm.

On obtient ainsi une lentille ayant une courbe de transmittance telle que représentée à la figure 5 qui montre un graphe montrant la transmittance d'un troisième exemple de réalisation d'une lentille ophtalmique selon l'invention en fonction de la longueur d'onde. Les mesures de caractérisation de cette lentille ont montrées que par ces mesures d'optimisation, la lentille est adaptée à la conduite automobile, ceci sans que la perception de teinte de couleur du verre par un observateur extérieur ait changé.

Il est en particulier possible d'observer sur ces figures 2, 3 et 5, que pour les lentilles selon l'invention on observe que la transmission dans la plage de longueurs d'onde comprises entre 400nm et 500nm présente un premier maximum de transmission 105 entre 405nm et 425nm qui peut être exprimé

- soit comme ayant une valeur de transmission au moins six fois supérieur à la transmission du premier minimum de transmission 100,
- soit comme ayant une valeur au moins deux fois supérieure à la transmission du premier minimum de transmission 100 avec une valeur de transmission (transmittance en %) supérieure d'au moins 2% de transmission,
- soit un pourcentage de transmission plus important d'au moins 2%, en particulier au moins 4% à la transmission du premier minimum de transmission 100.

Par la condition que la valeur de transmission (la transmittance) au premier maximum de transmission 105 soit au moins deux fois supérieure à la transmission du premier minimum de transmission 100 avec une valeur de transmission (transmittance en %) supérieure d'au moins 2% de transmission, on entend que si $T_{min1}$ est la valeur de la transmittance au premier minimum de transmission 100 et $T_{max1}$ est la valeur de transmission au premier maximum de transmission 105, $T_{max1} > 2 * T_{min1}$ et $T_{max1} > T_{min1} + 2\%$.

Par la condition que le pourcentage de transmission du premier maximum 105 de transmission soit plus important d'au moins 2%, en particulier au moins 4% à la transmission du premier minimum de transmission 100, on entend que $T_{max1} > T_{min1} + 2\%$, en particulier $T_{max1} > T_{min1} + 4\%$

Selon l'exemple de la figure 3, le premier minimum 100 possède une valeur de transmittance de 0,44 % et le premier maximum de 4,48 %.

Dans ce cas, la valeur de transmission du premier maximum de transmission 105 est 10,2 fois supérieure à la transmission du premier minimum de transmission 100. La différence de transmission entre le premier minimum 100 et la premier maximum des valeurs de transmittance est de 4,04% (=4,48%-0.44%) et donc la transmission du premier maximum de transmission 105 est au moins deux fois supérieure à la transmission du premier minimum de transmission 100 avec une valeur de transmission (transmittance en %) supérieure d'au moins 2% de transmission, soit ici de 4,04%.

Le pourcentage de transmission entre le premier maximum 105 et le premier minimum 100 est en valeur absolue de transmittance plus important d'au moins 2%, en particulier au moins 4% (ici 4.04%) à la transmission du premier minimum de transmission 100.

On comprend donc bien que les lentilles ophtalmiques selon l'invention permettent de protéger l'oeil humain plus efficacement contre le mauvais bleu sans que la partie non nuisible du bleu soit trop atténuée.

D'autres variantes sont possibles sans sortir du cadre de la présente invention qui est défini par les revendications. Ainsi, le substrat, la couche 13 peut être taillée pour apporter de plus une correction optique à la vision de l'utilisateur.

La couche 13 peut être prise en sandwich entre l'ensemble polarisant et une autre couche par exemple en polycarbonate cristal ou coloré. Dans ce cas, cela peut être cette dernière couche qui est taillée / polie pour apporter une correction optique et non la couche 13.

## Revendications

**1.** Lentille ophtalmique (1) comportant un substrat (13), ladite lentille présentant un spectre de transmission tel que:

- la transmission moyenne dans la gamme de longueur d'ondes comprises entre 380nm inclus et 780nm inclus est inférieure à 60%,
- la transmission moyenne aux longueurs d'ondes inférieures ou égales à 400 nm est inférieure à 1%,
- la transmission moyenne aux longueurs d'ondes supérieures à 400 nm et inférieures à 500 nm incluses est inférieure à 30% avec un premier minimum de transmission (100) inférieur à 10% entre 425 nm et 445 nm inclus,
- la transmission dans la plage de longueurs d'onde comprises entre 400nm et 500nm présente un premier maximum de transmission (105) entre 405nm et 425nm **caractérisé en ce qu'**elle possède une valeur de transmission au moins deux fois supérieure à la transmission du premier minimum de transmission (100) avec une valeur de transmission supérieure d'au moins 2% de transmission.

**2.** Lentille ophtalmique selon la revendication 1, **caractérisée en ce que** le premier maximum de transmission est au moins six fois supérieur à la transmission du premier minimum de transmission (100).

**3.** Lentille ophtalmique selon l'une quelconque des revendications 1 à 2, **caractérisée en ce que** le premier minimum (100) est situé à 435nm avec une précision +/- 5nm.

**4.** Lentille ophtalmique selon la revendication 3, **caractérisée en ce que** le premier minimum (100) est un pic d'absorption avec un taux d'absorption supérieur à 95%.

**5.** Lentille ophtalmique selon la revendication 4, **caractérisée en ce que** le pic d'absorption (100) présente une largeur au quart de hauteur de 50nm ou moins, et une largeur à mi-hauteur de 30nm ou moins, et une largeur au deux tiers de hauteur du pic d'absorption (100) de 20nm ou moins.

**6.** Lentille ophtalmique selon l'une quelconque des revendications 1 à 5, **caractérisée en ce que** la transmission au premier maximum (105) est supérieure à 1%.

**7.** Lentille ophtalmique selon l'une quelconque des revendications 1 à 6, **caractérisée en ce que** la transmission dans la gamme de longueur d'ondes comprise entre 440nm et 500nm augmente.

**8.** Lentille ophtalmique selon l'une quelconque des revendications 1 à 7, **caractérisée en ce que** la transmission moyenne entre 380 et 780 nm inclus est inférieure à 35%.

**9.** Lentille ophtalmique selon l'une quelconque des revendications 1 à 8, **caractérisée en ce que** la transmission moyenne entre 400nm et 450nm est inférieure à la transmission moyenne entre 450nm et 650nm et la transmission moyenne entre 450nm et 650nm est inférieure à la transmission moyenne entre 650nm et 780nm.

**10.** Lentille ophtalmique selon l'une quelconque des revendications précédentes adaptée à la conduite automobile selon la norme ISO12312-1 : 2013.

**11.** Lentille ophtalmique selon l'une quelconque des revendications 1 à 10, **caractérisée en ce qu'**elle comporte un ensemble polarisant (5).

**12.** Lentille ophtalmique selon l'une quelconque des revendications précédentes, **caractérisée en ce que** le substrat comporte une matière thermoplastique, notamment du polycarbonate.

**13.** Procédé d'optimisation d'une couleur d'une lentille ophtalmique selon l'une quelconque des revendications 1 à 12, en vue d'une conformité à la norme: ISO12312-1 : 2013 par rapport à un spectre donné, dans lequel on augmente la transmission de la lentille dans la plage de longueur d'ondes comprise d'une part entre 405nm et 425nm avec un premier maximum de transmission (105) entre 405nm et 425nm et d'autre part et entre 440nm et 450nm et on diminue la transmission dans la plage de longueurs d'onde compris entre 430nm et 440nm pour présenter un premier minimum de transmission (100) inférieur à 10%, le premier maximum de transmission (105) caractérisé en possédant une valeur de transmission au moins deux fois supérieure à la transmission du premier minimum de transmission (100) avec une valeur de transmission supérieure d'au moins 2% de transmission.

**Patentansprüche**

**1.** Ophthalmische Linse (1), die ein Substrat (13) umfasst, wobei die Linse ein derartiges Transmissionsspektrum aufweist, dass:

- die mittlere Transmission im Wellenlängenbereich zwischen 380 nm einschließlich und 780 nm einschließlich kleiner als 60 % ist,
- die mittlere Transmission bei Wellenlängen kleiner als oder gleich 400 nm kleiner als 1 % ist,
- die mittlere Transmission bei Wellenlängen größer als 400 nm und kleiner als 500 nm einschließlich kleiner als 30 % ist, mit einem ersten Transmissionsminimum (100) kleiner als 10 % zwischen 425 nm und 445 nm einschließlich,
- die Transmission im Wellenlängenbereich zwischen 400 nm und 500 nm ein erstes Transmissionsmaximum (105) zwischen 405 nm und 425 nm aufweist, **dadurch gekennzeichnet, dass** sie einen Transmissionswert besitzt, der mindestens zwei Mal größer als die Transmission des ersten Transmissionsminimums (100) ist, mit einem Transmissionswert, der um mindestens 2 % Transmission größer ist.

2. Ophthalmische Linse nach Anspruch 1, **dadurch gekennzeichnet, dass** das erste Transmissionsmaximum mindestens sechs Mal größer als die Transmission des ersten Transmissionsminimums (100) ist.

3. Ophthalmische Linse nach einem der Ansprüche 1 bis 2, **dadurch gekennzeichnet, dass** das erste Minimum (100) mit einer Genauigkeit von +/- 5 nm bei 435 nm liegt.

4. Ophthalmische Linse nach Anspruch 3, **dadurch gekennzeichnet, dass** das erste Minimum (100) ein Absorptionspeak mit einem Absorptionsgrad größer als 95 % ist.

5. Ophthalmische Linse nach Anspruch 4, **dadurch gekennzeichnet, dass** der Absorptionspeak (100) eine Breite bei einem Viertel der Höhe von 50 nm oder weniger und eine Breite bei halber Höhe von 30 nm oder weniger und eine Breite bei zwei Dritteln der Höhe des Absorptionspeaks (100) von 20 nm oder weniger aufweist.

6. Ophthalmische Linse nach einem der Ansprüche 1 bis 5, **dadurch gekennzeichnet, dass** die Transmission bei dem ersten Maximum (105) größer als 1 % ist.

7. Ophthalmische Linse nach einem der Ansprüche 1 bis 6, **dadurch gekennzeichnet, dass** die Transmission im Wellenlängenbereich zwischen 440 nm und 500 nm zunimmt.

8. Ophthalmische Linse nach einem der Ansprüche 1 bis 7, **dadurch gekennzeichnet, dass** die mittlere Transmission zwischen 380 und 780 nm einschließlich kleiner als 35 % ist.

9. Ophthalmische Linse nach einem der Ansprüche 1 bis 8, **dadurch gekennzeichnet, dass** die mittlere Transmission zwischen 400 nm und 450 nm kleiner als die mittlere Transmission zwischen 450 nm und 650 nm ist und die mittlere Transmission zwischen 450 nm und 650 nm kleiner als die mittlere Transmission zwischen 650 nm und 780 nm ist.

10. Ophthalmische Linse nach einem der vorhergehenden Ansprüche, die gemäß der Norm ISO12312-1:2013 zum Autofahren geeignet ist.

11. Ophthalmische Linse nach einem der Ansprüche 1 bis 10, **dadurch gekennzeichnet, dass** sie eine polarisierende Anordnung (5) umfasst.

12. Ophthalmische Linse nach einem der vorhergehenden Ansprüche, **dadurch gekennzeichnet, dass** das Substrat ein thermoplastisches Material umfasst, insbesondere Polycarbonat.

13. Verfahren zur Optimierung einer Farbe einer ophthalmischen Linse nach einem der Ansprüche 1 bis 12 im Hinblick auf die Konformität mit der Norm ISO12312-1:2013 in Bezug auf ein gegebenes Spektrum, bei dem man die Transmission der Linse im Wellenlängenbereich zwischen 405 nm und 425 nm mit einem ersten Transmissionsmaximum (105) zwischen 405 nm und 425 nm einerseits und zwischen 440 nm und 450 nm andererseits erhöht und man die Transmission im Wellenlängenbereich zwischen 430 nm und 440 nm verringert, so dass ein erstes Transmissionsminimum (100) kleiner als 10 % aufgewiesen wird, **dadurch gekennzeichnet, dass** das erste Transmissionsmaximum (105) einen Transmissionswert besitzt, der mindestens zwei Mal größer als die Transmission des ersten Transmissionsminimums (100) ist, mit einem Transmissionswert, der um mindestens 2 % Transmission größer ist.

## Claims

1. Ophthalmic lens (1) comprising a substrate (13), said lens having a transmission spectrum such that:

   - the mean transmission in the wavelength range between 380 nm inclusive and 780 nm inclusive is less than 60%;
   - the mean transmission at wavelengths less than or equal to 400 nm is less than 1%,
   - the mean transmission at wavelengths greater than 400 nm inclusive and less than 500 nm inclusive is less than 30% with a first transmission minimum (100) of less than 10% between 425 nm and 445 nm inclusive,
   - the transmission in the wavelength range between 400 nm and 500 nm has a first transmission maximum (105) between 405 nm and 425 nm, **characterized in that** it has a transmission value at least two times higher than the transmission of the first transmission minimum (100) with a transmission value that is higher by at least 2% transmission.

2. Ophthalmic lens according to Claim 1, **characterized in that** the first transmission maximum is at least six times higher than the transmission of the first transmission minimum (100).

3. Ophthalmic lens according to either one of Claims 1 and 2, **characterized in that** the first minimum (100) is located at 435 nm with an accuracy of $\pm$ 5 nm.

4. Ophthalmic lens according to Claim 3, **characterized in that** the first minimum (100) is an absorption peak with a degree of absorption of greater than 95%.

5. Ophthalmic lens according to Claim 4, **characterized in that** the absorption peak (100) has a quarter-height width of 50 nm or less, and a half-height width of 30 nm or less, and a width at two thirds of the height of the absorption peak (100) of 20 nm or less.

6. Ophthalmic lens according to any one of Claims 1 to 5, **characterized in that** the transmission at the first maximum (105) is greater than 1%.

7. Ophthalmic lens according to any one of Claims 1 to 6, **characterized in that** the transmission in the wavelength range between 440 nm and 500 nm increases.

8. Ophthalmic lens according to any one of Claims 1 to 7, **characterized in that** the mean transmission between 380 and 780 nm inclusive is less than 35%.

9. Ophthalmic lens according to any one of Claims 1 to 8, **characterized in that** the mean transmission between 400 nm and 450 nm is less than the mean transmission between 450 nm and 650 nm and the mean transmission between 450 nm and 650 nm is less than the mean transmission between 650 nm and 780 nm.

10. Ophthalmic lens according to any one of the preceding claims, suitable for driving according to the ISO 12312-1: 2013 standard.

11. Ophthalmic lens according to any one of Claims 1 to 10, **characterized in that** it comprises a polarizing assembly (5).

12. Ophthalmic lens according to any one of the preceding claims, **characterized in that** the substrate comprises a thermoplastic material, in particular polycarbonate.

13. Process for optimizing a colour of an ophthalmic lens according to any one of Claims 1 to 12, with a view to conformity with the ISO 12312-1: 2013 standard relative to a given spectrum, in which the transmission of the lens is increased in the wavelength range on the one hand between 405 nm and 425 nm with a first transmission maximum (105) between 405 nm and 425 nm and on the other hand between 440 nm and 450 nm and the transmission is decreased in the wavelength range between 430 nm and 440 nm to have a first transmission minimum (100) of less than 10%, **characterized in that** the first transmission maximum (105) has a transmission value at least two times higher than the transmission of the first transmission minimum (100) with a transmission value that is higher by at least 2% transmission.

# Fig.1

# Fig.2

| nm | T(%) | nm | T(%) | nm | T(%) | nm | T(%) | nm | T(%) |
|---|---|---|---|---|---|---|---|---|---|
| 1100 | 83,707 | 930 | 81,842 | 760 | 67,845 | 590 | 11,705 | 420 | 7,669 |
| 1090 | 84,425 | 920 | 81,058 | 750 | 66,824 | 580 | 12,369 | 410 | 3,516 |
| 1080 | 84,134 | 910 | 79,731 | 740 | 61,255 | 570 | 13,026 | 400 | 0,010 |
| 1070 | 84,493 | 900 | 80,253 | 730 | 46,727 | 560 | 13,582 | 390 | 0,000 |
| 1060 | 83,317 | 890 | 80,658 | 720 | 42,680 | 550 | 15,223 | 380 | 0,000 |
| 1050 | 83,886 | 880 | 79,961 | 710 | 47,279 | 540 | 11,084 | 370 | 0,000 |
| 1040 | 83,410 | 870 | 78,817 | 700 | 30,730 | 530 | 16,416 | 360 | 0,000 |
| 1030 | 83,560 | 860 | 78,029 | 690 | 27,611 | 520 | 12,673 | 350 | 0,000 |
| 1020 | 83,715 | 850 | 77,712 | 680 | 27,190 | 510 | 15,924 | 340 | 0,000 |
| 1010 | 83,098 | 840 | 76,881 | 670 | 18,000 | 500 | 18,277 | 330 | 0,000 |
| 1000 | 83,157 | 830 | 76,474 | 660 | 18,992 | 490 | 19,074 | 320 | 0,000 |
| 990 | 82,953 | 820 | 75,572 | 650 | 15,417 | 480 | 19,375 | 310 | 0,000 |
| 980 | 82,925 | 810 | 74,600 | 640 | 12,751 | 470 | 16,823 | 300 | 0,000 |
| 970 | 83,049 | 800 | 73,274 | 630 | 16,196 | 460 | 17,733 | 290 | 0,000 |
| 960 | 82,495 | 790 | 71,529 | 620 | 15,197 | 450 | 13,964 | 280 | 0,000 |
| 950 | 82,264 | 780 | 69,908 | 610 | 12,069 | 440 | 4,121 | | |
| 940 | 82,119 | 770 | 68,460 | 600 | 11,296 | 430 | 1,031 | | |

# Fig.3

| nm | T(%) | nm | T(%) | nm | T(%) | nm | T(%) | nm | T(%) |
|------|--------|-----|--------|-----|--------|-----|--------|-----|-------|
| 1100 | 89,110 | 930 | 88,954 | 760 | 81,845 | 590 | 22,298 | 420 | 4,480 |
| 1090 | 89,409 | 920 | 88,579 | 750 | 80,824 | 580 | 22,231 | 410 | 1,215 |
| 1080 | 90,932 | 910 | 87,780 | 740 | 76,255 | 570 | 20,943 | 400 | 0,012 |
| 1070 | 90,666 | 900 | 88,079 | 730 | 67,727 | 560 | 18,821 | 390 | 0,000 |
| 1060 | 89,884 | 890 | 88,347 | 720 | 63,680 | 550 | 17,115 | 380 | 0,000 |
| 1050 | 89,659 | 880 | 88,003 | 710 | 60,279 | 540 | 13,645 | 370 | 0,000 |
| 1040 | 89,705 | 870 | 87,287 | 700 | 42,730 | 530 | 15,258 | 360 | 0,000 |
| 1030 | 89,684 | 860 | 87,245 | 690 | 40,611 | 520 | 11,804 | 350 | 0,000 |
| 1020 | 89,811 | 850 | 87,287 | 680 | 34,190 | 510 | 11,731 | 340 | 0,000 |
| 1010 | 89,330 | 840 | 87,089 | 670 | 28,000 | 500 | 11,372 | 330 | 0,000 |
| 1000 | 89,365 | 830 | 86,686 | 660 | 28,992 | 490 | 10,509 | 320 | 0,000 |
| 990 | 89,319 | 820 | 86,344 | 650 | 27,417 | 480 | 9,880 | 310 | 0,000 |
| 980 | 89,443 | 810 | 85,796 | 640 | 23,751 | 470 | 8,921 | 300 | 0,000 |
| 970 | 89,548 | 800 | 85,091 | 630 | 27,196 | 460 | 8,353 | 290 | 0,000 |
| 960 | 89,472 | 790 | 84,239 | 620 | 27,197 | 450 | 7,122 | 280 | 0,000 |
| 950 | 89,310 | 780 | 83,426 | 610 | 23,069 | 440 | 1,814 | | |
| 940 | 89,314 | 770 | 82,529 | 600 | 22,366 | 430 | 0,440 | | |

# Fig.4

# Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5149183 A
- EP 2602655 A
- FR 2990774
- US 2010149483 A